# EUROPEAN PATENT SPECIFICATION

(11) **EP 0 833 465 B1**
(45) Date of publication and mention of the grant of the patent: **25.02.2004**
(21) Application number: 97305743.3
(22) Date of filing: 30.07.1997
(51) Int. Cl.: H04B 7/26

(54) **Wireless communication system and method comprising a transreceiver and a plurality of remote wireless communication devices**
Verfahren und System zur drahtlosen Übertragung mit Sender-Empfänger und mehreren drahtlosen Endgeräten
Méthode et système de communication sans fil comprenant un émetteur-récepteur et une pluralité de terminaux de communication cloignés sans fil

(30) Priority: 25.09.1996 US 721603
(43) Date of publication of application: 01.04.1998
(73) Proprietor: NCR INTERNATIONAL INC., Dayton, Ohio 45479 (US)
(72) Inventor: Plocher, Peter Hans, Duluth, Georgia 30096 (US)
(74) Representative: Irish, Vivien Elizabeth

(56) References cited:
- US-A- 4 479 215
- US-A- 4 780 885
- US-A- 5 416 829
- US-A- 5 550 893
- PATENT ABSTRACTS OF JAPAN vol. 1996, no. 05, 31 May 1996 (1996-05-31) -& JP 08 023564 A (NEC CORP), 23 January 1996 (1996-01-23) -& US 5 701 590 A (FUJINAMI) 23 December 1997 (1997-12-23)

## Description

This invention relates to wireless communication systems and methods. It has application in systems comprising a transceiver arranged to communicate with a plurality of remote wireless communication devices.

In today's retail environment, there may be many different types of wireless devices, such as wireless data terminals, wireless hand-held scanners, wireless electronic shelf labels and wireless voice products. Unfortunately, some of these devices may utilize the same RF spectrum, resulting in interference. One of the bands most often used today is the Industrial, Scientific and Medical (ISM) band.

Therefore, it would be desirable to provide a communication system that could eliminate interference between wireless devices.

US-A-5 701 590 discloses a radio communication system wherein on detection of a larger number of channels than those in use are receiving signals at the same time, it is determined that transmission intermodulation has occurred in a mobile station. A selected busy channel is then changed so that the frequency generated by transmission intermodulation is different than the reception frequency of an idle channel. Hence, idle channels are not blocked by the transmission intermodulation of the mobile station and degradation of use efficiency of frequencies can be prevented. US-A-4 780 885 relates to a real-time frequency management system which permits the automatic selection of optimum operational frequencies in HF communication transmitters and receivers. US-A-5 416 829 relates to a dual mode cellular radio communication apparatus having an echo canceller employed in both analog and digital modes. US-A-5 550 893 discloses a cellular telephone with uniform speech quality and perceived sound independently of whether the phone is being operated in digital or analog mode. US-A-4 479 215 relates to a power-line-carrier communications system capable of shifting operating frequency to avoid power-line interference.

According to the invention in one aspect thereof a wireless communications system comprising a plurality of wireless communication devices adapted to communicate with a transceiver, the transceiver including a transmitter, a plurality of receivers, a plurality of transmitter control circuits each of which is adapted to enable the transmitter to transmit to a selected one of the wireless communications devices when connected thereto and a switch circuit for connecting the transmitter control circuits to the transmitter one at a time so as to prevent interference between the communication devices, characterized in that the transceiver further comprises a host system adapted to control operation of the switch circuit, the host system being coupled to a corresponding one of the plurality of receivers and being adapted to operate the switch on receipt of a signal from the receiver to which it is coupled so as to connect the appropriate control circuit to the transmitter, which enables the transmitter to transmit to the communication device from which the signal was received.

The plurality of host systems may also each be energizable on demand, for example from host systems which utilise the transmitter to communicate with the wireless communication devices.

In one preferred embodiment of the invention, the plurality of host systems are all connected to a single switch control means which controls the switch circuit in accordance with control signals received from the host systems.

In embodiments of the invention, the transceiver may be a multi-mode transceiver and the wireless communications devices at least in part utilise a common RF spectrum.

According to the invention in another aspect thereof a method of minimising interference among a plurality of wireless communication devices comprising the steps of providing a transceiver for communicating with the devices, the transceiver including a transmitter, a plurality of receivers, a plurality of transmitter control circuits, each of which is adapted to enable the transmitter to transmit to a selected one of the wireless communications devices when connected thereto and a switch circuit for connecting the transmitter control circuits to the transmitter; characterized by providing a host system coupled to the plurality of receivers; receiving a signal in a receiver from a communication device, causing the host system to operate the switch circuit to connect an appropriate transmitter control circuit to the transmitter; transmitting only to the communication device from which the receiver has received a signal.

### Brief Description of the Drawings

Additional benefits and advantages of the present invention will become apparent to those skilled in the art to which this invention relates from the subsequent description of the preferred embodiments and the appended claims, taken in conjunction with the accompanying drawings, in which:

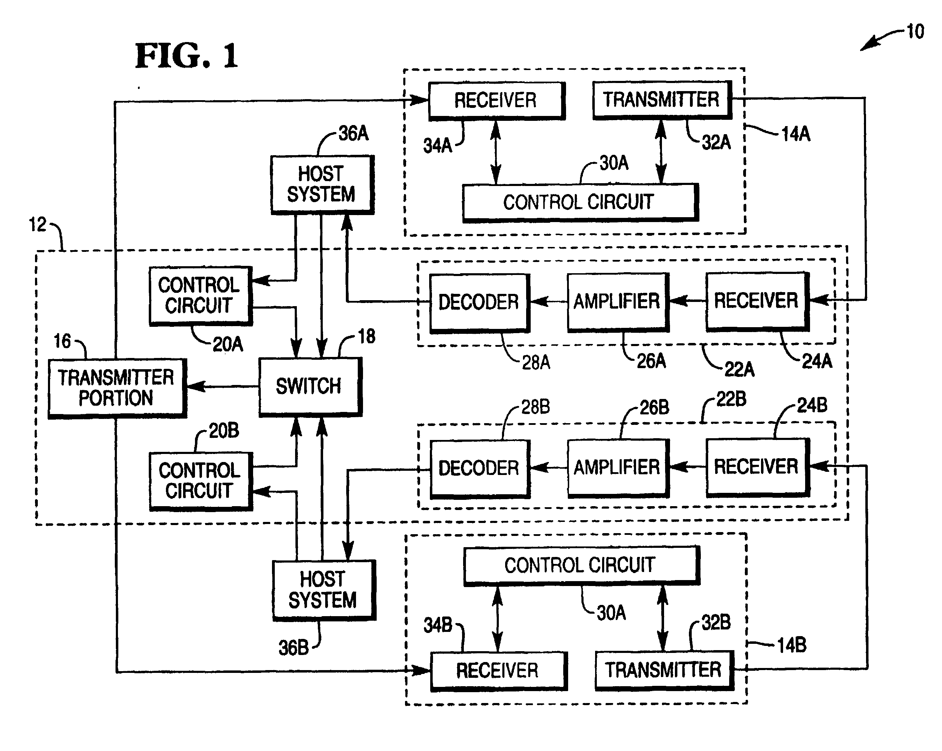

Fig. 1 is a block diagram of a first embodiment of the communication system of the present invention; and
Fig. 2 is a block diagram of a second embodiment of the communication system of the present invention.

### Detailed Description of the Preferred Embodiment

Referring now to the Drawings, communication system 10 includes multi-mode transceiver 12, wireless communication devices 14a and 14b, and host systems 36a and 36b.

Multi-mode transceiver 12 transmits and receives messages from wireless communication devices 14a and 14b, even through devices 14a and 14b may be operating at different frequencies, in different transmission modes, or in overlapping bandwidths. Multi-mode transceiver 12 includes transmitter portion 16, switch 18, control circuits 20a and 20b, and receiver circuits 22a and 22b.

Transmitter portion 16 transmits messages to wireless communication devices 14a and 14b. Transmitter portion 16 produces an output signal whose frequency and signal characteristics are controlled by control circuits 20a or 20b.

Switch 18 connects one of control circuits 20a or 20b to transmitter portion 16. An analog RF switch is suitable for use as switch 18.

Control circuit 20a and 20b control the output signal frequency and signal characteristics of transmitter portion 16. Control circuits 20a and 20b receive information for transmission from host systems 36a and 36b.

In prior systems having a plurality of transmitters, each transmitter has its own control circuit. The present invention separates control circuits 20a and 20b from transmitter portion 16 by switch 18. Thus, transmitter portion 16 can transmit to only one of devices 14a or 14b at a time. Interference between transmitters is eliminated because only one transmitter 12 is in use.

Receiver circuits 22a and 22b receive incoming information signals from devices 14a and 14b and forward the information to host systems 36a and 36b. Operation of transceiver 12 assumes that device 14a initiates communication with host system 36a, and that host system 36b initiates communication with device 14b. However, the present invention may be modified to accommodate any combination of controlling schemes.

Receiver circuits 22a and 22b include receivers 24a and 24b, amplifiers 26a and 26b, and decoders 28a and 28b.

Receivers 24a and 24b receive signals from devices 14a and 14b.

Amplifiers 26a and 26b amplify the signals received by receivers 24a and 24b.

Decoders 28a and 28b decode the information from the amplified signals.

Devices 14a and 14b include control circuits 30a and 30b, transmitters 32a and 32b, and receivers 34a and 34b.

Devices 14a and 14b are preferably different types of wireless devices. They may include any combination of wireless data terminals, wireless hand-held scanners, wireless electronic shelf labels, and wireless voice products. There may be many such devices and their associated control circuits (e.g., 20a and 20b), receiver circuits (e.g., 22a and 22b), and host systems (e.g., 36a and 36b) in system 10, but only two are shown for clarity.

Using transceiver 12, host systems 36a and 36b provide information for transmission to devices 14a and 14b and receive information from devices 14a and 14b. Additionally, host systems 36a and 36b sample the output signals from decoders 28a and 28b to control operation of switch 18 to initiate transmission. Host systems 36a and 36b relinquish control over switch 18 when transmission of their information is finished.

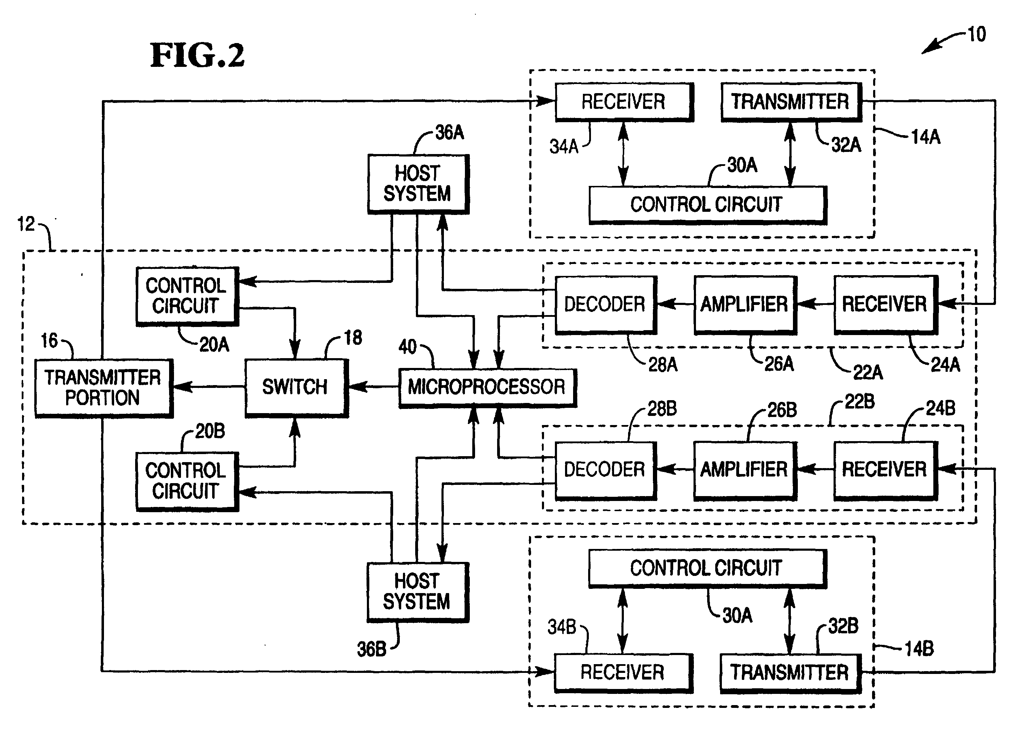

With reference to Fig. 2, a single microprocessor 40 controls switch 18 instead of host systems 36a and 36b. As in the first embodiment, switching may be controlled by host systems 36a and 36b or devices 14a and 14b. When host systems 36a and 36b initiate communication with devices 22a and 22b, microprocessor 40 receives a signal from host systems 36a and 36b and changes switch 18 accordingly. When wireless devices 14a and 14b initiate communication with host systems 36a and 36b, microprocessor 40 receives a signal from receivers 22a and 22b and changes switch 18 accordingly.

## Claims

1. A wireless communications system comprising
a plurality of wireless communication devices (14A, 14B) adapted to communicate with a transceiver (12), the transceiver (12) including a transmitter (16), a plurality of receivers (22A, 22B), a plurality of transmitter control circuits (20A, 20B) each of which is adapted to enable the transmitter (16) to transmit to a selected one of the wireless communications devices (14A, 14B) when connected thereto and a switch circuit (18) for connecting the transmitter control circuits (20A, 20B) to the transmitter (16) one at a time so as to prevent interference between the communication devices, **characterized in that** the transceiver further comprises a host system (36A, 36B, 40) adapted to control operation of the switch circuit (18), the host system(36A, 368, 40) being coupled to a corresponding one of the plurality of receivers (22A, 22B) and being adapted to operate the switch (18) on receipt of a signal from the receiver (22A, 22B) to which it is coupled so as to connect the appropriate control circuit (22A, 22B) to the transmitter (16), which enables the transmitter (16) to transmit to the communication device (14A, 14B) from which the signal was received.

2. A wireless communication system according to claim 1, wherein the host system comprises a plurality of host systems (36A, 36B), each individually energizable on demand.

3. A wireless communications system according to claim 2, wherein the plurality of host systems (36A, 36B) are all connected to a single switch control means (40) which controls the switch circuit (18) in accordance with control signals received from the host systems (36A, 36B).

4. A wireless communication system according to any preceding claim, wherein the plurality of wireless communication devices (14A, 14B) have overlapping communication bandwidths.

5. A wireless communication system wherein one of the communication devices (14A, 14B) comprises a wireless electronic shelf label.

6. A wireless communication system wherein one of the communication devices (14A, 14B) comprises a wireless hand-held scanner.

7. A wireless communication system wherein one of the communication devices (14A, 14B) comprises a wireless voice transceiver.

8. A method of minimising interference among a plurality of wireless communication devices (14A, 14B) comprising the steps of
providing a transceiver (12) for communicating with the devices (14A, 14B), the transceiver including a transmitter (16), a plurality of receivers (22A, 22B), a plurality of transmitter control circuits (20A, 20B), each of which is adapted to enable the transmitter (16) to transmit to a selected one of the wireless communications devices (14A, 14B) when connected thereto and a switch circuit (18) for connecting the transmitter control circuits (20A, 20B) to the transmitter (16); **characterized by**
providing a host system (36A, 36B, 40) coupled to the plurality of receivers (22A, 22B);
receiving a signal in a receiver (22A, 22B) from a communication device (14A, 14B)
causing the host system (36A, 36B, 40) to operate the switch circuit (18) to connect an appropriate transmitter control circuit (20A, 20B) to the transmitter (16);
transmitting only to the communication device (14A, 14B) from which the receiver (22A, 22B) has received a signal.

## Patentansprüche

1. Drahtloses Kommunikationssystem, das umfasst:
eine Mehrzahl an drahtlosen Kommunikationsgeräten (14A, 14B), die dazu eingerichtet sind, mit einem Transceiver (12) zu kommunizieren, wobei der Transceiver (12) umfasst: einen Sender (16), eine Mehrzahl von Empfängern (22A, 22B), eine Mehrzahl von Senderkontrollschaltkreisen (20A, 20B), von denen jeder dazu eingerichtet ist, den Sender (16) zu befähigen, an ein ausgewähltes der drahtlosen Kommunikationsgeräte (14A, 14B) zu senden, falls er damit verbunden ist, und einen Schalterschaltkreis (18) zum Verbinden der Senderkontrollschaltkreise (20A, 20B) mit dem Sender (16), jeweils einer zur gleichen Zeit, so dass Interferenz zwischen den Kommunikationsgeräten vermieden wird, **dadurch gekennzeichnet, dass** der Transceiver weiterhin umfasst: ein Hostsystem (36A, 36B, 40), das dazu eingerichtet ist, den Betrieb des Schalterschaltkreises (18) kontrollieren, wobei das Hostsystem (36A, 36B, 40) an den entsprechenden der Mehrzahl der Empfänger (22A, 22B) angeschlossen ist und dazu eingerichtet ist, den Schalter (18) zu betätigen beim Empfang eines Signals des Empfängers (22A, 22B), an den es angeschlossen ist, so dass der geeignete Kontrollschaltkreis (22A, 22B) mit dem Sender (16) verbunden wird, was es dem Sender (16) ermöglicht, an das Kommunikationsgerät (14A, 14B) zu senden, von dem das Signal empfangen wurde.

2. Drahtloses Kommunikationssystem nach Anspruch 1, bei dem das Hostsystem eine Mehrzahl von Hostsystemen (36A, 36B) aufweist, die einzeln auf Anforderung einschaltbar sind.

3. Drahtloses Kommunikationssystem nach Anspruch 2, wobei die Mehrzahl der Hostsysteme (36A, 36B) alle an eine einzelne Schalterkontrolleinrichtung (40) angeschlossen sind, die den Schalterschaltkreis (18) kontrolliert, in Übereinstimmung mit den von den Hostsystemen (36A, 36B) empfangenen Kontrollsignalen.

4. Drahtloses Kommunikationssystem nach einem der vorhergehenden Ansprüche, wobei die Mehrzahl der drahtlosen Kommunikationsgeräte (14A, 14B) überlappende Kommunikationsbandbreiten aufweisen.

5. Drahtloses Kommunikationssystem nach einem der vorhergehenden Ansprüche, wobei eins der Kommunikationsgeräte (14A, 14B) ein drahtloses elektronisches Regaletikett aufweist.

6. Ein drahtloses Kommunikationssystem nach einem der vorhergehenden Ansprüche 1 bis 4, wobei eins der Kommunikationsgeräte (14A, 14B) einen drahtlosen tragbaren Scanner aufweist.

7. Ein drahtloses Kommunikationssystem nach einem der vorhergehenden Ansprüche 1 bis 4, wobei eins der Kommunikationsgeräte (14A, 14B) einen drahtlosen Sprachtransceiver aufweist.

8. Verfahren zur Interferenzminimierung zwischen einer Mehrzahl von drahtlosen Kommunikationsgeräten (14A, 14B), das folgende Schritte umfasst:
Bereitstellen eines Transceivers (12) zur Kommunikation mit den Geräten (14A, 14B), wobei der Transceiver umfasst: einen Sender (16), eine Mehrzahl an Empfängern (22A, 22B), eine Mehrzahl an Senderkontrollschaltkreisen (20A, 20B), von denen jeder dazu eingerichtet ist, es dem Sender (16) zu ermöglichen, an ein ausgewähltes der drahtlosen Kommunikationsgeräte (14A, 14B) zu senden, falls er damit verbunden ist, und einen Schalterschaltkreis (18) zum Verbinden der Senderkontrollschaltkreise (20A, 20B) mit dem Sender (16); **gekennzeichnet durch** die Schritte:
Bereitstellen eines Hostsystems (36A, 36B, 40), das an die Mehrzahl der Empfänger (22A, 22B) angeschlossen ist; Empfangen eines Signals mit einem der Empfänger (22A, 22B) von einem der Kommunikationsgeräte (14A, 14B);
Veranlassen des Hostsystems (36A, 36B, 40), den Schalterschaltkreis (18) zu betätigen, um einen geeigneten der Senderkontrollschaltkreis (20A, 20B) mit dem Sender (16) zu verbinden;
Senden nur an das der Kommunikationsgeräte (14A, 14B), von dem der Empfänger (22A, 22B) ein Signal empfangen hat.

## Revendications

1. Système de communication sans fil, comprenant :
une pluralité de dispositifs de communication sans fil (14A, 14B) conçus pour communiquer avec un émetteur-récepteur (12), l'émetteur-récepteur (12) comportant un émetteur (16), une pluralité de récepteurs (22A, 22B), une pluralité de circuits de commande d'émetteur (20A, 20B) dont chacun est conçu pour permettre à l'émetteur (16) d'émettre vers l'un sélectionné des dispositifs de communication sans fil (14A, 14B) lorsqu'il lui est connecté et un circuit de commutation (18) pour connecter un par un les circuits de commande d'émetteur (20A, 20B) à l'émetteur (16) afin d'éviter un brouillage entre les dispositifs de communication, **caractérisé en ce que** l'émetteur-récepteur comprend en outre un système hôte (36A, 36B, 40) conçu pour commander le fonctionnement du circuit de commutation (18), le système hôte (36A, 36B, 40) étant couplé à l'un qui lui correspond de la pluralité de récepteurs (22A, 22B) et étant conçu pour faire fonctionner le commutateur (18) lors de la réception d'un signal du récepteur (22A, 22B) auquel il est couplé afin de connecter le circuit de commande approprié (22A, 22B) à l'émetteur (16), ce qui permet à l'émetteur (16) d'émettre vers le dispositif de communication (14A, 14B) dont le signal a été reçu.

2. Système de communication sans fil suivant la revendication 1, dans lequel le système hôte comprend une pluralité de systèmes hôtes (36A, 36B) dont chacun peut être activé individuellement sur demande.

3. Système de communication sans fil suivant la revendication 2, dans lequel la pluralité de systèmes hôtes (36A, 36B) sont tous connectés à un même moyen de commande de commutateur (40) unique qui commande le circuit de commutation (18) en conformité avec des signaux de commande reçus des systèmes hôtes (36A, 36B).

4. Système de communication sans fil suivant l'une quelconque des revendications précédentes, dans lequel la pluralité de dispositifs de communication sans fil (14A, 14B) ont des largeurs de bande de communication se chevauchant.

5. Système de communication sans fil suivant l'une quelconque des revendications précédentes, dans lequel l'un des dispositifs de communication (14A, 14B) comprend une étiquette de rayonnage électronique sans fil.

6. Système de communication sans fil suivant l'une quelconque des revendications 1 à 4, dans lequel l'un des dispositifs de communication (14A, 14B) comprend un lecteur à balayage portatif sans fil.

7. Système de communication sans fil suivant l'une quelconque des revendications 1 à 4, dans lequel l'un des dispositifs de communication (14A, 14B) comporte un émetteur-récepteur vocal sans fil.

8. Procédé de minimisation des interférences entre une pluralité de dispositifs de communication sans fil (14A, 14B) comprenant les étapes suivantes :
l'utilisation d'un émetteur-récepteur (12) pour communiquer avec les dispositifs (14A, 14B), l'émetteur-récepteur comportant un émetteur (16), une pluralité de récepteurs (22A; 22B), une pluralité de circuits de commande d'émetteur (20A, 20B) dont chacun est conçu pour permettre à l'émetteur (16) d'émettre vers l'un sélectionné des dispositifs de communication sans fil (14A, 14B) lorsqu'il lui est connecté et un circuit de commutation (18) pour connecter les circuits de commande d'émetteur (20A, 20B) à l'émetteur (16) ; **caractérisé par**
l'utilisation d'un système hôte (36A, 36B, 40) couplé à la pluralité de récepteurs (22A, 22B) ;
la réception d'un signal dans un récepteur (22A, 22B) d'un dispositif de communication (14A, 14B),
la mise en fonctionnement par le système hôte (36A, 36B, 40) du circuit de commutation (18) pour connecter un circuit de commande d'émetteur (20A, 20B) approprié à l'émetteur (16);
le fait de n'émettre que vers le dispositif de communication (14A, 14B) dont le récepteur (22A, 22B) a reçu un signal.
